(19) Europäisches Patentamt European Patent Office Office européen des brevets

(11) **EP 4 293 396 A1**

(12) **EUROPEAN PATENT APPLICATION**

(43) Date of publication:
**20.12.2023  Bulletin 2023/51**

(21) Application number: **22179690.7**

(22) Date of filing: **17.06.2022**

(51) International Patent Classification (IPC):
**G02B 5/02** *(2006.01)*     **G02B 5/22** *(2006.01)*
**G02C 7/10** *(2006.01)*

(52) Cooperative Patent Classification (CPC):
**G02B 5/0294; G02B 5/0278; G02B 5/22;
G02C 7/104;** G02C 2202/10

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Université catholique de Louvain
1348 Louvain-la-Neuve (BE)**

• **President and Fellows of Harvard College
Cambridge, MA 02138 (US)**

(72) Inventor: **Gilles, VANNUSCORPS
1348 Louvain la Neuve (BE)**

(74) Representative: **Icosa
83 avenue Denfert-Rochereau
75014 Paris (FR)**

(54)  **OPTICAL LENS AND METHODS FOR AUGMENTED VISUAL PERCEPTION**

(57)     The present invention relates to an optical lens for augmented visual perception of a scene, the optical lens comprising a bandpass filter and a blurring filter, so as to lower contrast and high spatial frequencies of the scene.

**FIG. 1**

# Description

## FIELD OF INVENTION

The present invention relates to optical lenses and methods for augmented visual perception, and to ophthalmic lenses and spectacles.

## BACKGROUND OF INVENTION

In the human retina, photoreceptor cells are responsible of visual phototransduction, which is the process during which light is absorbed by pigment molecules present in the photoreceptor cells, and then converted to an electrical signal.

There are two types of photoreceptors: rods and cones. Cones are classified in three categories on the basis of their spectral sensitivity lo light: short-wavelength-sensitive cones (or S cones), middle-wavelength-sensitive cones (or M cones), and long-wavelength-sensitive cones (or L cones).

Cones are responsible for photopic and color vision, whereas rods are responsible for scotopic vision.

Information from cones is transmitted to the brain via two main types of neurons - magnocellular and parvocellular neurons - that have complementary characteristics.

In the brain, visual information is processed by brain areas organized in two main different anatomical streams: a ventral stream, which is mainly involved in the perception of color and shape and a dorsal stream, which is mainly involved in the visual perception for visually guided behaviors, the processing of movement and the processing of the spatial characteristics of objects (their location, orientation).

Color sheets to be superposed on a reading surface *(e.g.,* on a paper or on a book) have been proposed as a mean to facilitate reading. Nevertheless, these colored sheets do not provide light filtering properties tailored to favor processing through one visual stream or another of the subject. Moreover, the choice of the sheet is arbitrary, since based on subjective statements or personal preferences of the subjects, and there is no evidence or suggestion of such sheets to be beneficial for reading impairment.

Moreover, these colored sheets can only be used while reading on a fixed reading surface and are not compatible with most everyday life activities.

In this domain, reading glasses also exist. Reading glasses provide a vision correction which compensate for diminished vision due to presbyopia. However, they do not provide either a satisfactory improvement of visual perceptions.

## SUMMARY

The aim of the present invention is to overcome some or all drawbacks of the prior art and to improve the effectiveness of visual aids to reading, notably for dyslexics and/or individuals who suffer from a deficient magnocellular stream.

It is also an objective of the present invention to develop a visual aid that improves visual processing in the magnocellular stream, and therefore improve dorsal stream visual functions, such as the perception of moving or rapidly changing stimuli.

To this end, the object of the invention is an optical lens and methods for enhanced visual perception of movement.

The invention thus relates to an optical lens for augmented visual perception of a scene. The optical lens has a first side configured to face an eye of a subject, and a second side opposite to the first side. The optical lens comprises:

- a bandpass filter having a center wavelength comprised between 540 nm and 560 nm and having a full width at half maximum equal or inferior to 50 nm; and/or

- a blurring filter configured to attenuate the spatial frequency of the visual stimulus corresponding to the scene which are greater than 10 cyc/deg.

The bandpass filter and/or the blurring filter lower contrast and high spatial frequencies of the scene observed through said optical lens and inhibit the parvocellular stream of the subject wearing said optical lens.

In an embodiment, the optical lens comprises a bandpass filter and a blurring filter. The combination of both filters improves the inhibition of the parvocellular stream of the subject.

In an embodiment, the center wavelength of the bandpass filter is comprised between 545 nm and 555 nm, preferably equal to 550 nm. This specific range of wavelength is located where the absorbance of human M cones and the absorbance of human L cones are similar, *i.e.,* a range of wavelength that minimizes the contribution of the parvocellular stream to vision and maximizes the contribution of the magnocellular stream to vision.

In an embodiment, the bandpass filter has an overall transmission equal or inferior to 10%, preferably inferior to 4%.

In an embodiment, the blurring filter is configured to attenuate the spatial frequency of the visual stimulus corresponding to the scene which are greater than 8 cyc/deg, preferably greater than 6 cyc/deg, more preferably greater than 4 cyc/deg.

In an embodiment, the bandpass filter is laid onto to the first side of the optical lens and the blurring filter is laid onto to the second side of the optical lens.

In an embodiment, the blurring filter is made of a solid diffusive material, or a solid material having a surface roughness, preferably roughened quartz or polytetrafluoroethylene.

In an embodiment, the optical lens is an ophthalmic lens, preferably a spectacle lens.

The invention relates also to spectacles comprising a frame and a pair of spectacle lenses as disclosed hereabove.

The invention relates also to a method for selection of optical lenses for improving visual perception of a scene by a subject, the method comprising:

a. providing the optical lens or the spectacles disclosed hereabove to the subject, the optical lens or spectacles being interposed at a predetermined distance from the eyes of the subject and from the scene;

b. measuring an optical parameter of the subject, wherein said providing and measuring are repeated for at least two optical lenses or spectacles having different filtering features of the bandpass filter and/or different features of the blurring filter; and

c. among the provided optical lenses or spectacles, selecting the optical lens or spectacles corresponding to the best measured optical parameter.

In an embodiment, the optical parameter is selected from the list of: reading efficiency - for instance with inverse efficiency index -, visual motion direction perception threshold, visual motion speed perception threshold.

In an embodiment, the scene comprises a linear arrangement of symbols, numbers and/or letters. Indeed, such scenes have been proven very difficult to read/discriminate for individuals suffering from dyslexia. Thus, using such scenes is especially relevant to select to most appropriate lenses or spectacles for a dyslexic individual.

The invention further relates to a method for improving the perception of a moving or transient visual stimulus, the method comprising interposing the optical lens or the spectacles disclosed hereabove between the eye of the subject and the scene.

Last, the invention also relates to a method for treating an impairment of the magnocellular and/or parvocellular visual pathway of a subject, the method comprising interposing the optical lens or the spectacles disclosed hereabove between the eye of the subject and a visual stimulus. This method is especially appropriate when the subject is suffering from dyslexia.

## DEFINITIONS

In the present disclosure, the following terms have the following meanings:

- "*About*" is used herein to mean approximately, roughly, around, or in the region of. When the term "*about*" is used in conjunction with a numerical range, it modifies that range by extending the boundaries above and below the numerical values set forth. When the term "*about*" is used preceding a figure means plus or less 10% of the value of said figure.

- By "*alexia*", also called acquired dyslexia, it is meant an acquired reading difficulty, for instance due to brain trauma.

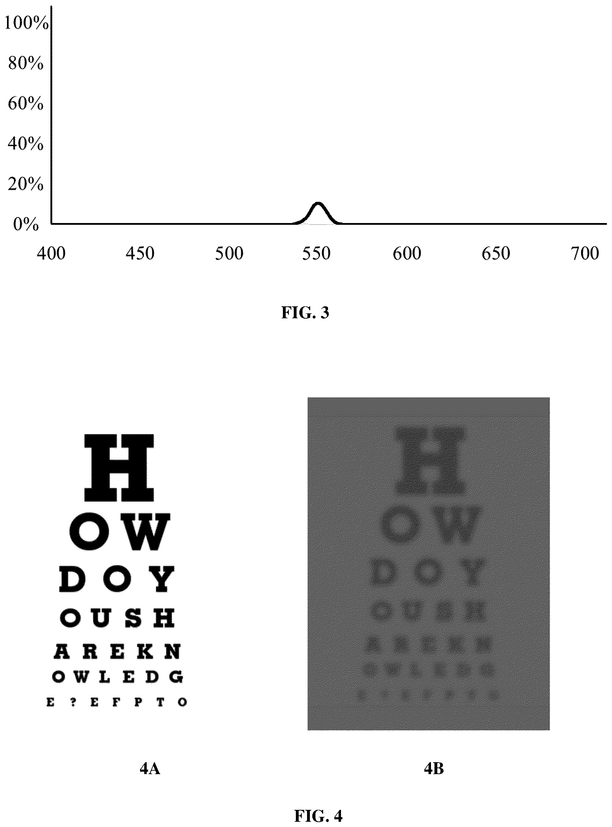

- By "*blurring filter*" it is meant a filter through which the perception of the limits between objects of a scene - in other words, edges or transitions between two parts of the scene providing different visual stimuli - is degraded. Typically, edges of objects are not sharply perceived through a blurring filter, but appear diffuse or fuzzy, while the global shape of the object remains perceptible. This is illustrated in **figure 4,** image **4B** being blurred.

- By "*cyc/deg*" it is meant the unit for spatial frequency: number of repetitions in a pattern within 1 degree of visual angle. For instance, a pattern comprising 50 vertical lines regularly spaced every 1 cm and placed at a distance of 1 m from the eye of a subject is viewed within a visual angle of about 28° and generates a visual stimulus with a spatial frequency of about 50/28=1.8 cyc/deg. The same pattern placed at a distance of 5 m generates a visual stimulus with a spatial frequency of about 8.7 cyc/deg. The spatial frequency is not an intrinsic property of a scene, but a property of the visual stimulus corresponding to the scene.

- By "*diffusion*" of a lens it is meant its property to scatter the light passing therethrough into other direction, *i.e.,* different than the incident direction.

- By "*dyslexia*", it is meant a reading difficulty in a subject of adequate intelligence and in some cases with preserved visual acuity. Some individuals with dyslexia suffer from a deficient magnocellular stream.

- By "*frost filter*" it is meant a blurring filter. Frost filter are often referred to in commercial references such as diffusion filters supplied by LEE Filters (a Panavision Company).

- by "*light stimulus*" it is meant the light that reaches the eye of a subject and that elicits a response in the photoreceptor cells present in the retina (phototransduction).

- By "*refraction*" of a lens it is meant its property to deviate the light passing therethrough into other direction, *i.e.,* different than the incident direction.

- By "*scene*" it is meant a physical object, such as a text, a symbol, or a drawing, and more generally an everyday environment observed by the patient.

- By "*transmission*" of a lens it is meant the ratio between the light incident on a side of the lens and the light transmitted to the opposite side, either for a predefined light wavelength or overall. By overall transmission it is meant the average percentage of visible light transmitted through the filter, integrated over the whole visible spectrum.

- By "*visual stimulus*" it is meant the light signal generated by a scene and received by the eye of the patient.

- By "*visual perception*" it is meant the ability of a subject to perceive a visual stimulus (*e.g.,* to perceive color, shape, or movement of the visual stimulus) through the corresponding light stimulus that reaches the eye.

**BRIEF DESCRIPTION OF THE DRAWINGS**

**Figure** 1 is a schematic representation of the optical lens (1) according to the invention.

**Figure** 2 is a graph showing exemplary absorbance spectra (absorbance 1 corresponds to 100% of light absorbance) of the human M cones (solid line) and L cones (dotted line), as a function of wavelength of light (in nm).

**Figure 3** is a graph showing the transmission spectra (in %) of a bandpass filter compliant with the present disclosure, as a function of wavelength of light (in nm).

**Figure 4** is a photograph of a text observed without **(figure 4A)** and with **(figure 4B)** a blurring filter 13 of the invention.

**Figure 5** is a graph showing the reading efficiency of a subject who is reading a text (total number of words accurately read on ordinate axis) without wearing any lens (none) and while wearing optical lenses 1 (center wavelength in nm of a bandpass filter 12).

**DETAILED DESCRIPTION**

This invention relates to an optical lens 1 for augmented visual perception.

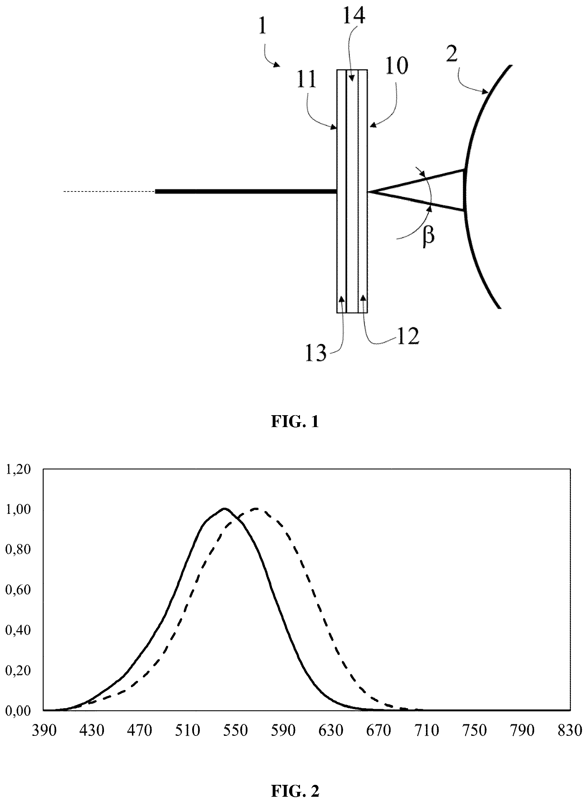

**Figure 1** is a schematic illustration of an optical lens 1 according to the present disclosure.
The optical lens 1 has a first side 10 configured to face an eye 2 of a subject, and a second side 11 opposite to the first side 10.
The optical lens 1 comprises a bandpass filter 12 and/or a blurring filter 13. Preferably, the optical lens 1 comprises both a bandpass filter 12 and blurring filter 13.
As will be later explained, each of these filters 12, 13 may be a film or layer. In this case, the optical lens 1 has a layered structure comprising a substrate 14, onto which said filters 12, 13 are laid.
For example, the bandpass filter 12 may be a thin colored film attached to the substrate 14. The blurring filter 13 may be a sheet, for instance a polystyrene sheet, attached to the substrate 14.
The substrate 14 may be a non-corrective optical lens (*e.g.,* an optical lens of a protective eyewear) or a corrective optical lens (*e.g.,* an ophthalmic lens made for the subject based on a prescription) or any material suitable to be placed in front of the eyes 2 of the subject.

**The bandpass filter**

The bandpass filter 12 has a center wavelength comprised between 540 nm and 560 nm, preferably between 545 nm and 555 nm. Moreover, the bandpass filter 12 has a full width at half-height maximum (FWHM) equal or inferior to 50 nm.
More precisely, the center wavelength of the bandpass filter 12 is the wavelength corresponding to the maximum transmission of said filter. For a bandpass filter 12 having a transmission spectrum which is a symmetric curve (as in **figure 3),** the center wavelength is also the wavelength at the center of said curve.
This bandpass filter 12 allows to block, or strongly attenuate, all the incident light wavelengths, except those belonging to the allowed band of the filter.
As a result, the light stimulus reaching the subject only comprises a small range of wavelengths corresponding to the wavelengths equally absorbed by the Medium wavelength-sensitive cones, also called M cones, and by the Long wavelength-sensitive cones, also called L cones, of the human retina.
A center wavelength selected in a small range around 550 nm ensures that the bandpass filter 12 is centered at a wavelength located at the intersection between the absorbance spectra of the M cones and of the L cones, *i.e.,* a wavelength equally absorbed by M cones and L cones.
Preferably, the center wavelength of the bandpass filter 12 is equal to 550 nm. This wavelength corresponds, in most subjects, to the wavelength of the intersection between the absorbance spectra of the M cones and of the L cones.
In some embodiments, the center wavelength may be in a range between 545 nm and 555 nm and different than 550 nm, for instance if the subject presents a corneal spectral-sensitivity, or M and L cones absorbance spectra, slightly different than average.
**Figure 2** is a graph illustrating typical absorption spectra of M cones (solid line) and L cones (dotted line).
As aforementioned, the light stimulus received by the cones of the retina is then converted into an electrical signal (phototransduction) adapted to be transmitted to the brain, via two main types of neurons: magnocellular neurons, or neurons of the magnocellular pathway, and parvocellular neurons, or neurons of the parvocellular pathway.

These pathways regulate the human vision by receiving the electrical signals from the cones and providing information on the basis of the different photon absorptions of these cones. The magnocellular pathway processes visual stimuli that are rapidly moving, seen for a very short amount of time, blurred and/or very faint, and the parvocellular pathway provides color vision and high spatial resolution.

More precisely, the neurons of the magnocellular pathway add the inputs received from the M cones and the inputs received from the L cones (M+L). The neurons of the parvocellular pathway subtract the inputs received from the M cones to the inputs received from the L cones and *vice versa* (M-L and L-M).

Therefore, the bandpass filter 12 of the lens 1 allows to increase the magnocellular/parvocellular stimulation ratio (MPR), *i.e.,* to facilitate the processing of visual stimuli through the magnocellular pathway. The MPR may be estimated as:

$$\frac{M+L}{|M-L|}$$

wherein M is the level of activity elicited by a light stimulus in M cones *(i.e.,* the inputs received from the M cones), and L is the level of activity elicited by the light stimulus in L cones *(i.e.,* the inputs received from the L cones).

Of note, various techniques may be employed to measure the levels of activity elicited by a light stimulus in M and L cones, in order to calculate the MPR.

In several situations, it may be desirable to increase the MPR; for instance, whenever the magnocellular pathway is deactivated and/or the parvocellular pathway is overactivated; for instance, in subjects with sleep deprivation, with reading, spelling or handwriting difficulties, with dyslexia or alexia, or with learning or memory difficulties.

It may also be beneficial to increase the MPR when a fast response to moving or changing visual stimuli is required, such as during driving, or videogaming, or while watching a moving object.

The information from the magnocellular and parvocellular neurons is received and processed by the ventral stream and dorsal stream. The former receives information from both types of neurons, whereas the latter mainly receives information from magnocellular neurons.

Therefore, by increasing the MPR, the bandpass filter 12 further allows to support the functions of the dorsal stream, notably:

- the visual perception for visually guided behaviors such as catching a ball on the fly; driving...,
- the processing of movement,
- the processing of the spatial characteristics of objects (location, orientation).

The bandpass filter 12 preferably has a transmission at the center wavelength which is equal or inferior to 20%.

**Figure 3** is a graph showing an exemplary transmission spectrum of a bandpass filter 12 compliant with the present disclosure. In this example, the transmission at the center wavelength which is equal to 10%.

Moreover, the bandpass filter 12 preferably has an overall transmission which is equal or inferior to 10%. Preferably, the overall transmission is inferior to 4%.

Such low overall transmission allows to effectively reduce the luminance contrast between the scene *(e.g.,* letters or figures) and the background.

## The blurring filter

The blurring filter 13 is configured to attenuate the spatial frequency of the visual stimulus corresponding to the scene which are greater than 10 cyc/deg. By "*attenuate*" it is meant that the intensity of the component of spatial frequency f is reduced by at least 5%, preferably at least 10%, ideally at least 50%. The component of spatial frequency f is typically the value obtained by Fourier transform of the visual stimulus. The cut-off frequency of the blurring filter 13 is the lowest spatial frequency for which attenuation is higher than 5%. In other words, the blurring filter 13 is a low pass filter.

In an embodiment, the blurring filter 13 is configured to attenuate the spatial frequency of the visual stimulus corresponding to the scene which are greater than 8 cyc/deg, preferably greater than 6 cyc/deg, more preferably greater than 4 cyc/deg. As edges of the scene correspond to high spatial frequency component of the visual stimulus, the cut-off frequency of the blurring filter 13 determines the amount of signal that will stimulate the parvocellular pathway: the lower the cut-off frequency, the lower the signal available for parvocellular pathway.

The blurring filter 13 may be a diffusive filter or a corrugated filter. For instance, a subject looking at a grid through a diffusive filter may not perceive precisely the limits of each wire of the grid: it corresponds to a blurring filter 13 with high cut-off frequency. Alternatively, a corrugated layer - though not diffusive, *i.e.,* purely refractive - may distort the visual stimulus so that neighboring wires appear superimposed, without altering the sharp perception of edges: it corresponds to a spatial bandpass filter. The blurring filter 13 may be any combination of these two structures: a diffusive filter and a corrugated filter.

Having this blurring filter 13 on the path of the light beam, interposed between the visual stimulus and the eye 2 of the subject, allows to spread out - by diffusion and/or refraction - the light beam traversing the lens 1.

The blurring filter 13 may be a layer or a film attached to one side 10, 11 of the lens 1, preferably, to the second side 11 (figure 1).

For example, the blurring filter 13 may be made of a solid diffusive material (for instance, a polystyrene sheet), or a solid material having a surface roughness (for instance, roughened quartz or polytetrafluoroethylene).

Preferably, the blurring filter 13 is detachable, *i.e.*, it is reversibly attached to the lens 1. Having a detachable blurring filter 13 allows to obtain a versatile lens 1 in which different diffusing power may be provided. In this case, the blurring filter 13 may be selected and changed depending on a task to be performed by the subject.

The blurring filter 13 allows to attenuate the high spatial frequencies of the light stimulus, comprising information about fine details of the visual stimulus.

As a result, the blurring filter 13 allows to softens the edges (which correspond to high spatial frequencies) of an object observed therethrough, while maintaining the coarser features (which correspond to lower spatial frequencies).

Overall, the blurring filter 13 allows to alter the visual perception of the subject of the visual stimulus, by providing a blurring effect to the light stimulus reaching the eye 2. An example of blurring effect is illustrated in **figure 4.**

More precisely, **figure 4** is a schematic illustration of a text observed without **(figure 4A)** and with **(figure 4B)** the optical lens 1 comprising the bandpass filter 12 and the blurring filter 13.

Advantageously, the blurring filter 13 allows to further facilitate processing of visual information in the magnocellular pathway rather than in the parvocellular pathway, since the former processes blurred, faint stimuli and the latter sharp-edged, high contrast stimuli. Accordingly, an increase of the MPR is obtained.

Therefore, the optical lens 1 comprising both the bandpass filter 12 and the blurring filter 13 allows to significantly upregulate the magnocellular pathway and improve the visual perception, thanks to the combination of the wavelength filtering properties provided by the former and the blurring effect provided by the latter.

When the blurring filter 13 comprises a diffusive filter, it may be characterized as follows. A component of spatial frequency $f$ of the visual stimulus will be attenuated if light arriving from two adjacent peaks are superimposed by diffusion. For instance, two peaks separated by 0.1° in the visual stimulus - corresponding to a spatial frequency $f$=10 - will be superimposed if the light ray coming from one peak is scattered over an angle sufficiently large. Assuming a distance between lens and eye of 1 cm, the scattering angle should be larger than 5°. Therefore, the blurring filter 13 may be defined with a diffusion power, which is the percentage of light transmitted by the blurring filter 13 outside a predefined dispersion angle $\beta$, for a normal angle of incidence *(i.e., for*

a light perpendicular to the surface of the blurring filter 13, see **figure 1).** The diffusing power is thus expressed as %:$\beta$.

For example, in a perfectly non-diffusive material, all the incident light *(i.e., 100%)* propagates through the material without changing its direction *(i.e., it is not scattered)*. In this case, the diffusing power is 0%:0°.

The blurring filter 13 may have a diffusing power equal or smaller than 20°: 16°, *i.e.*, the blurring filter 13 transmits 20% or less of the incident light outside a dispersion angle $\beta$ of 16° (which correspond to more than 80% of the light being transmitted inside said angle $\beta$).

In some examples, the blurring filter 13 has a diffusing power equal or smaller than 20%:10°.

Preferably, the diffusing power of the blurring filter 13 is greater than 5%:3°, more preferably 10%:5°.

The lower is the diffusing power, the lower is the blurring effect provided by the blurring filter.

Advantageously, a diffusing power comprised between 20%:16° and 10%:5°is high enough to provide a blurring of the light stimulus, but small enough to ensure that the visual stimulus is perceived correctly by the subject *(e.g., for a visual stimulus consisting in a text, the diffusing power is small enough to ensure that the blurred letters and numbers are recognizable and can be read by the subject).*

In a preferred embodiment, the blurring filter 13 is a frost filter such as diffusion filters supplied by LEE Filters (a Panavision Company).

When the blurring filter 13 comprises a corrugated filter, the same reasoning applies, except that angle $\beta$ to consider is not a scattering angle, but a refraction angle $\gamma$. Therefore, the blurring filter 13 may be defined with a refractive power, which is the percentage of light transmitted by the blurring filter 13 with a deviation angle equal to or larger than $\gamma$, for a normal angle of incidence *(i.e., for a light perpendicular to the surface of the blurring filter 13).* The refractive power is thus expressed as %: $\gamma$.

For example, in a perfectly planar lens, all the incident light *(i.e., 100%)* propagates through the material without changing its direction *(i.e., it is not refracted)*. In this case, the refractive power is 0%:0°.

The blurring filter 13 may have a refractive power equal or smaller than 20%: 16°, *i.e.*, the blurring filter 13 refracts 20% or more of the incident light with a refracted angle $\gamma$ of 16° or more (which correspond to less than 80% of the light being transmitted with low refraction).

In some examples, the blurring filter 13 has a refractive power equal or smaller than 20%:10°. Preferably, the refractive power of the blurring filter 13 is greater than 5%:3°, more preferably 10%:5°.

As both diffusive power and refractive power are expressed under the same form and define an amount of light deviated, the blurring filter may be characterized with a deviating power, this power being the sum of the diffusive power and the refractive power. The blurring filter 13 may have a deviating power equal or smaller than 20%:16°, *i.e.,* the blurring filter 13 refracts 20% or more of the incident light with a deviated angle $\gamma$ of 16° or more (which correspond to less than 80% of the light being transmitted with low refraction or diffusion).

In some examples, the blurring filter 13 has a deviating power equal or smaller than 20%:10°. Preferably, the deviating power of the blurring filter 13 is greater than 5%:3°, more preferably 10%:5°.

## Ophthalmic lenses and spectacles

The invention also relates to spectacles comprising a frame and a pair of optical lenses 1 as described hereinabove.

For instance, the bandpass filter 12 and the blurring filter 13 may be cut and shaped, from a thin film or layer, to conform to the substrate of the optical lenses 1 of the spectacles.

In this case, the thickness of the bandpass filter 12 and the blurring filter 13 is preferably of about 0,1 mm or less.

## Materials

The optical lens 1 may be made of any material suitable to be placed facing the eye 2 of the subject (*e.g.*, glass or plastic).

As aforementioned, the optical lens 1 may have a layered structure, for instance a three-layer structure comprising the substrate 14, the bandpass filter 12 and the blurring filter 13.

In this case, the substrate 14, the bandpass filter 12 and the blurring filter 13 may be laid such that the light stimulus, before reaching the eye 2, passes through:

- the bandpass filter 12, then the substrate 14, then the blurring filter 13;
- the blurring filter 13, then the substrate 14, then the bandpass filter 12;
- the bandpass filter 12, then the blurring filter 13, then the substrate 14;
- the blurring filter 13, then the bandpass filter 12, then the substrate 14;
- the substrate 14, then the blurring filter 13, then the bandpass filter 12; or
- the substrate 14, then the bandpass filter 12, then the blurring filter 13.

Preferably, when the optical lens 1 has a three-layer structure, the substrate 14 is in the middle, the blurring filter 13 is laid onto the second side 11, and the bandpass filter 12 is laid onto the first side 10, as schematically shown in **figure 1.**

In some examples, the optical lens may have a one-layer or two-layer structure.

For instance, the substrate 14 of the optical lens 1 may be a tinted lens incorporating appropriate dyes which have the wavelength filtering properties of the bandpass filter 12 previously described.

In this case, the function of the bandpass filter 12 is provided by the substrate material 14.

In addition, the substrate 14 of the optical lens 1 may present a rough surface (preferably, provided on the second side 11).

In this case, the function of the blurring filter 13 is provided by the substrate material 14 and, more precisely, by the rough surface.

## Methods for selecting optimal lenses

The invention also relates to a method for selecting an optical lens 1 for improving visual perception of a subject.

The method may comprise a first measuring step during which one or more optical parameters of the subject are measured.

Then, at least one optical lens 1 is provide to the subject, who places the optical lens 1 at a predetermined distance from a scene (for instance, at a distance of 60 cm) and from the eyes (for instance, at a distance of 1 cm).

During a measuring step, the optical parameter of the subject is measured while the subject is wearing the optical lens 1.

Preferably, this measuring step may comprise several phases. During a first phase, different optical lenses 1 are successively provided to the subject. The bandpass filters 12 of these optical lenses 1 have different features. The measurement of the optical parameter is repeated for each optical lens 1, and the optical lens 1 of the plurality corresponding to the best optical parameter is selected. The features of the bandpass filters 12 may be selected from the list of: center wavelengths, FWHM, maximum transmission, overall transmission, or a combination thereof.

During a second phase, different blurring filters 13 having different features are successively coupled to the selected optical lens 1. The measurement of the optical parameter is repeated while each of the blurring filter 13 is provided on the selected lens 1, and the blurring filter 13 corresponding to the best optical parameter is selected. The features of the blurring filter 13 may be selected from the list of: cut-off frequency, attenuation level, shape of the cut-off - first order, second order or higher -or a combination thereof.

In the method, at least two optical lenses 1 having different filtering features of the bandpass filter 12 and/or different features of the blurring filter 13 are provided to the subject and lead to a measurement of an optical parameter of the subject, so as to select the optical lens corresponding to the best measured optical parameter. Preferably, the setup of measurement - type of scene, eye/lens and scene/lens distances, illumination - is kept unchanged with all optical lenses 1 tested.

The method described hereinabove advantageously allows to identify the optimal optical lens 1 for improving the visual perception of a subject with a typical visual system.

Preferably, for a subject with a typical visual system, the optical parameter is a perception threshold.

For instance, a visual motion direction perception threshold of the subject may be measured during a first estimating step. This measurement may be performed for instance via a four forced-choice random-dot kinematogram and an adaptive staircase procedure.

In addition, a visual motion speed perception threshold of the subject may be measured during said first measuring step. This may be performed for instance via a motion speed discrimination task and an adaptive staircase procedure.

The method described hereinabove further allows to identify the optimal optical lens 1 for improving the visual perception of a subject having an impairment of the magnocellular visual pathway; preferably, a subject with dyslexia.

In this case, the optical parameter is preferably a parameter related to reading efficiency, for instance an inverse efficiency index.

This optical parameter may be measured via any known reading test (e.g., by providing lists of pseudo-words composed of orientation-sensitive letters that the subject must read out-loud). The inverse efficiency index may be calculated by dividing the reading time by the percentage of errors.

The reading test may comprise linear arrangements of symbols, numbers and/or letters. Preferably, the reading test comprises pseudo-words. Tests comprising pseudo-words are particularly adapted for assessing the reading efficiency of people having dyslexia.

**Methods for improving visual perception**

The invention also relates to a method for improving visual perception.

In particular, the method allows to improve the perception of a moving or transient visual stimulus.

The method comprises: interposing the optical lens 1 (or spectacles comprising said optical lens 1) between the eye 2 of a subject and a visual stimulus.

For instance, the visual stimulus may be a moving object or a transient stimulus observed by a steady or moving subject.

The interposition of the lens 1 fosters a processing of the light stimulus through the magnocellular pathway, i.e., increase the MPR thanks to the combination of the bandpass filter 12 and the blurring filter 13.

**Methods for treating an impairment**

Last, the invention also relates to a method for treating an impairment of the magnocellular and/or parvocellular visual pathway of a subject. The method comprises interposing the optical lens according or the spectacles disclosed hereabove between the eye of the subject and a scene. Then, the magnocellular stream will be more solicited, leading finally to reduction of impairment.

Preferably, this method is used for subject suffering from dyslexia.

**EXAMPLE**

The present invention is further illustrated by the following example.

In this experiment, a participant having dyslexia suffering from a severe difficulty to read pseudo-words composed of orientation-sensitive letters (e.g., p, b, d, q) was exposed to lists of pseudo-words comprising orientation-sensitive letters (e.g., padaba) and asked to read as many of them as possible in 1 minute. The number of pseudo-words accurately read by the subject in one minute was counted. The reading efficiency was calculated as the total number of words accurately read.

The experiment was repeated while the subject was not wearing any lens and while the subject was wearing different optical lenses comprising a bandpass filter having a center wavelength and a FWHM of 50 nm. The optical lenses differed in that each comprised a bandpass filter having a different center wavelength. The tested center wavelengths were: 440 nm, 445 nm, 450 nm, 500 nm, 520 nm, 550 nm, 570 nm, 600 nm, 630 nm, 650 nm, 670 nm.

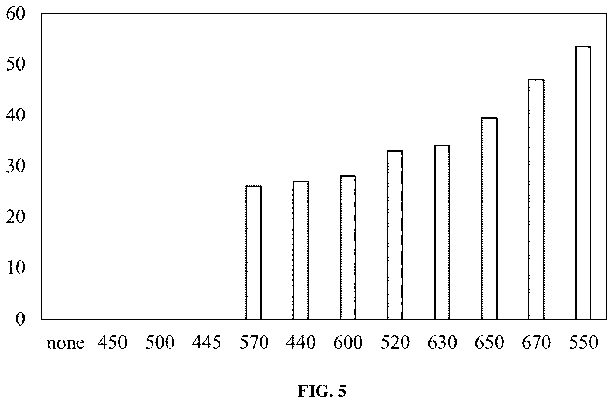

The results obtained are shown in **figure 5.** More precisely, **figure 5** is a graph showing the reading efficiency per minute (vertical axis) as a function of the center wavelength of the bandpass filter (horizontal axis) by a person with severe dyslexia without any filter and with 11 different filters of varying properties. The numbers on the axis refer to the center wavelength of the bandpass filter (in nm). The leftmost category on the horizontal axis (noted "none") corresponds to the subject reading without any lens.

These results show that the best reading efficiency is obtained with the optical lenses 1 comprising a bandpass filter 12 having a center wavelength equal to 50 nm.

Addition of a blurring filter (2016 White diffusion from LEE Filters) led the subject to increase his reading performance.

**Claims**

1. Optical lens (1) for augmented visual perception of a scene, said optical lens having a first side (10) configured to face an eye (2) of a subject, and a second side (11) opposite to the first side (10), the optical lens (1) comprising:

   • a bandpass filter (12) having a center wavelength comprised between 540 nm and 560 nm and having a full width at half maximum equal or inferior to 50 nm; and

- a blurring filter (13) configured to attenuate the spatial frequency of the visual stimulus corresponding to the scene which are greater than 10 cyc/deg;

thereby lowering contrast and high spatial frequencies of the scene observed through said optical lens and inhibiting the parvocellular stream of the subject wearing said optical lens.

2. The optical lens (1) of claim **1,** wherein the center wavelength of the bandpass filter (12) is comprised between 545 nm and 555 nm, preferably equal to 550 nm.

3. The optical lens (1) of any one of claims **1** to **2,** wherein the bandpass filter (12) has an overall transmission equal or inferior to 10%, preferably inferior to 4%.

4. The optical lens (1) of any one of claims **1** to **3,** wherein the blurring filter (13) is configured to attenuate the spatial frequency of the visual stimulus corresponding to the scene which are greater than 8 cyc/deg, preferably greater than 6 cyc/deg, more preferably greater than 4 cyc/deg.

5. The optical lens (1) according to any one of claims **1** to **4,** wherein the bandpass filter (12) is laid onto to the first side (10) of the optical lens (1) and the blurring filter (13) is laid onto to the second side (11) of the optical lens (1).

6. The optical lens according to any one of claims **1** to **5,** wherein the blurring filter (13) is made of a solid diffusive material, or a solid material having a surface roughness, preferably roughened quartz or polytetrafluoroethylene.

7. The optical lens (1) according to any one of claims **1** to **6,** wherein the optical lens (1) is an ophthalmic lens, preferably a spectacle lens.

8. Spectacles comprising a frame and a pair of spectacle lenses according to claim **7.**

9. Method for selection of optical lenses for improving visual perception of a scene by a subject, the method comprising:

   a. providing the optical lens (1) according to any one of claims **1** to **7** or the spectacles according to claim **8** to the subject, the optical lens (1) or spectacles being interposed at a predetermined distance from the eyes (2) of the subject and from the scene;
   b. measuring an optical parameter of the subject,

wherein said providing and measuring are repeated for at least two optical lenses (1) or spectacles having different filtering features of the bandpass filter (12) and/or different features of the blurring filter (13); and
c. among the provided optical lenses (1) or spectacles, selecting the optical lens (1) or spectacles corresponding to the best measured optical parameter.

10. The method of claim **9,** wherein the optical parameter is selected from the list of: reading efficiency, inverse efficiency index, visual motion direction perception threshold, visual motion speed perception threshold.

11. The method of claim **9** or **10,** wherein the scene comprises a linear arrangement of symbols, numbers and/or letters.

**FIG. 1**

**FIG. 2**

**FIG. 3**

4A

4B

**FIG. 4**

**FIG. 5**

Europäisches
Patentamt

European
Patent Office

Office européen
des brevets

# EUROPEAN SEARCH REPORT

Application Number

EP 22 17 9690

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FR 2 666 991 A1 (GODART PATRICE) 27 March 1992 (1992-03-27) * abstract; figure 7 * | 1-11 | INV. G02B5/02 G02B5/22 G02C7/10 |
| A | US 2004/064065 A1 (PESCATORE JOHN ANTHONY [US]) 1 April 2004 (2004-04-01) * paragraphs [0005], [0037], [0038] * | 1-11 | |
| A | US 6 612 697 B1 (AURELIUS MICHAEL J [US] ET AL) 2 September 2003 (2003-09-02) * abstract; figure 8 * | 1-11 | |
| A | EP 0 127 821 B1 (SCHOTT GLASS TECH INC [US]) 27 April 1988 (1988-04-27) * figure 1 * * page 3, line 26 – line 39 * | 1-11 | |
| A | RAY N J ET AL: "Yellow Filters Can Improve Magnocellular Function: Motion Sensitivity, Convergence, Accommodation, and Reading", ANNALS OF THE NEW YORK ACADEMY OF SCIENCES, NEW YORK ACADEMY OF SCIENCES, US, vol. 1039, no. 1, 9 January 2006 (2006-01-09), pages 283-293, XP071401961, ISSN: 0077-8923, DOI: 10.1196/ANNALS.1325.027 * the whole document * | 1-11 | |
| | | | TECHNICAL FIELDS SEARCHED (IPC) |
| | | | G02B G02C |

The present search report has been drawn up for all claims

| Place of search | Date of completion of the search | Examiner |
|---|---|---|
| Munich | 3 November 2022 | Girardin, François |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 17 9690

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2022

| Patent document cited in search report | | Publication date | Patent family member(s) | | Publication date |
|---|---|---|---|---|---|
| FR 2666991 | A1 | 27-03-1992 | NONE | | |
| US 2004064065 | A1 | 01-04-2004 | NONE | | |
| US 6612697 | B1 | 02-09-2003 | NONE | | |
| EP 0127821 | B1 | 27-04-1988 | EP | 0127821 A1 | 12-12-1984 |
| | | | JP | S6356182 B2 | 07-11-1988 |
| | | | JP | S59227742 A | 21-12-1984 |

EPO FORM P0459

For more details about this annex : see Official Journal of the European Patent Office, No. 12/82